# EUROPEAN PATENT SPECIFICATION

(11) **EP 2 495 521 B1**
(45) Date of publication and mention of the grant of the patent: **09.04.2014**
(21) Application number: 12157659.9
(22) Date of filing: 01.03.2012
(51) Int. Cl.: F28F 19/00

(54) **Heat exchanger of a vehicle provided with a protection grid**
Wärmetauscher eines Fahrzeugs mit einem Schutzgitter
Échangeur de chaleur de véhicule fourni avec une grille de protection

(30) Priority: 02.03.2011 IT TO20110187
(43) Date of publication of application: 05.09.2012
(73) Proprietor: DENSO THERMAL SYSTEMS S.p.A., 10046 Poirino (Torino) (IT)
(72) Inventor: Lanfranco, Francesco, I-10046 POIRINO (Torino) (IT); Moschella, Marco, I-10046 POIRINO (Torino) (IT)
(74) Representative: Vanzini, Christian

(56) References cited:
- JP-A- 60 219 411
- US-A- 3 385 355
- US-A- 3 897 850
- US-A- 4 592 437
- US-A1- 2002 069 624
- US-B1- 6 692 347

## Description

The present invention relates to a heat exchanger of a vehicle, comprising
a frame,
a plurality of parallel tubes extending between two opposite sides of the frame,
a pair of headers, each of which is arranged at a corresponding one of said two opposite sides of the frame, and
a protection grid, attached at a face of the heat exchanger and including a plurality of parallel grid elements, wherein each of said grid elements is adapted to shield a corresponding tube of the heat exchanger.

Protection grids are conventionally used in motor vehicles to protect heat exchangers such as heaters and condensers.

In fact, it is known that, during its life, a heat exchanger for automotive applications is subject to damages caused by the impact from stones during the ride of the vehicle. One of the solutions to eliminate or at least mitigate the risk of damage provides precisely for the application of a protection grid on the front face of the heat exchanger.

US 2002/0069624 discloses an intake screen for a vehicle, which is fitted against a radiator plate which frames and/or supports a radiator.

A solution of the type defined at the beginning is described, for example, in the publication EP 0 980 504, which has a heat exchanger according to the preamble of claim 1 in which the protection grid is attached to the heater tubes by clips.

Such solution has several drawbacks. First, since there are different heaters with different geometries of the tubes, it is necessary to arrange different clips that are adapted to such different geometries. Secondly, since the clips have to operate in an elastic field, in heaters having significant thicknesses the clips can be structurally weak and not very efficient during operation. Furthermore, in the case of manual assembly, the proper application of the clips can be checked only by visual control. Another drawback is related to the fact that the application of components to the tubes may adversely affect the integrity of the latter, in both the production process, and during operation. Moreover, since the clips are in contact with the heater tubes, the heat emitted by the latter can cause a dilatation of the clips, with consequent weakening of the mechanical seal. Furthermore, it is difficult to manufacture a joint that is free from vibrations.

Therefore, an object of the present invention is to provide a heat exchanger with a protection grid that is able to at least partially obviate the above stated drawbacks.

Such object is achieved according to the invention by a heat exchanger of the type defined in the beginning as described by the features of claim 1, in which fastening and supporting means are provided, by means of which opposite side edges of the protection grid are directly connected and firmly fastened to the frame or to the headers, and by means of which the protection grid is supported by the heat exchanger, and anchoring means by means of which a lower edge of the grid is unfirmly retained to a lower side of the heat exchanger.

Such a solution allows achieving an almost all-purpose assembling system, since the fastening and supporting means and the anchoring means are not affected by the geometry of the tubes, therefore they can be used in different models of exchanger. Moreover, the higher degree of standardization of the solution allows objectively checking the suitability of the assembly. Furthermore, inasmuch it is given up to attach components to the tubes of the exchanger, on one hand, the risk of causing damages to such tubes is avoided, and, on the other hand, any possible adverse impact of the thermal effects on the quality of the mechanical seal of the assembly is prevented.

Preferred embodiments of the invention are defined in the dependant claims, which are meant as an integral part of the present specification.

Further characteristics and advantages of the exchanger according to the invention will be more clearly understood from the following detailed description of some embodiments of the invention, given with reference to the annexed drawings, which are provided by way of example only, and not as a limitation, in which:
- Fig. 1 is an axonometric view of the lower part of a heat exchanger according to the invention;
- Figs. 2 and 3 are views at an enlarged scale of details indicated by the arrow II and the arrow III of Fig. 1, respectively;
- Fig. 4 is a view at an enlarged scale and from below of a detail, according to the arrow IV of Fig. 1;
- Figs. 5 and 6 are front and rear views, respectively, of a protection grid of the heat exchanger of Fig.1;
- Figs. 7 and 8 are views that show a second embodiment of a heat exchanger according to the invention, with and without the protection grid, respectively;
- Fig. 9 is a side view at an enlarged scale of a detail, according to the arrow IX of Fig. 7;
- Figs. 10 and 11 are views at an enlarged scale of details indicated by the arrow X and the arrow XI of Fig. 7, respectively;
- Fig. 12 is a simplified cross-sectional view of a lower portion of the exchanger of Fig. 7.

In the following description, and in the claims, spatial terms such as "upper", "lower", "side", "front", and "rear" and other ones are referred to the usual installation arrangement of the heat exchanger onto vehicles.

The heat exchanger can be, for example, a heater, a condenser, an intercooler, or an oil cooler.

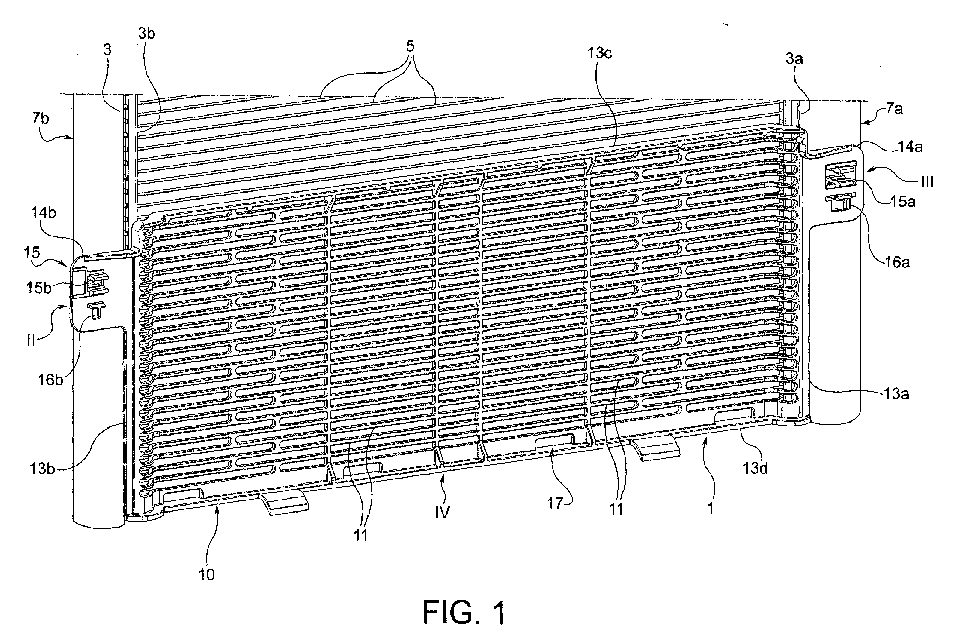

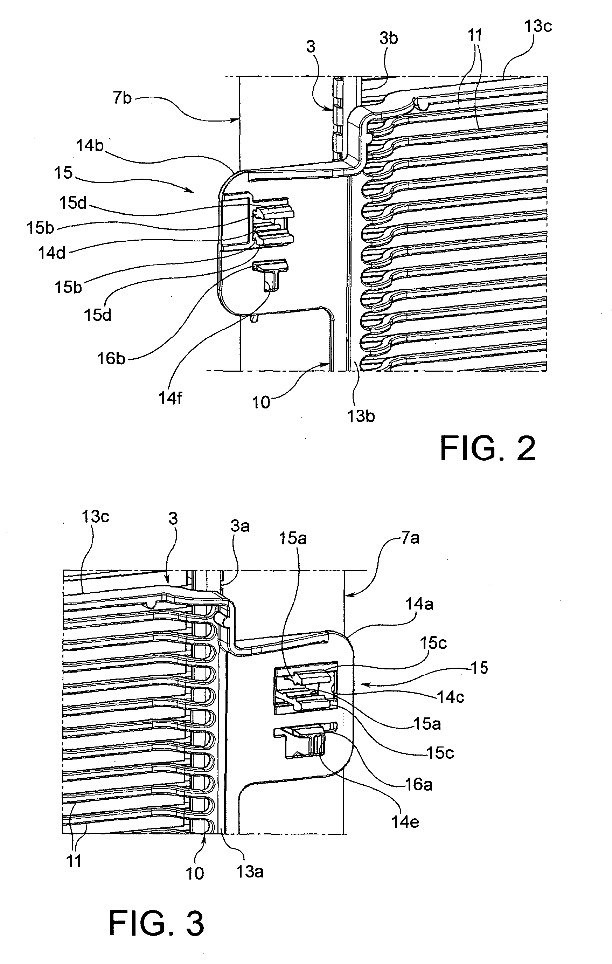

With reference to the Figs. 1 to 6, a heat exchanger according to the invention is generally indicated by 1.

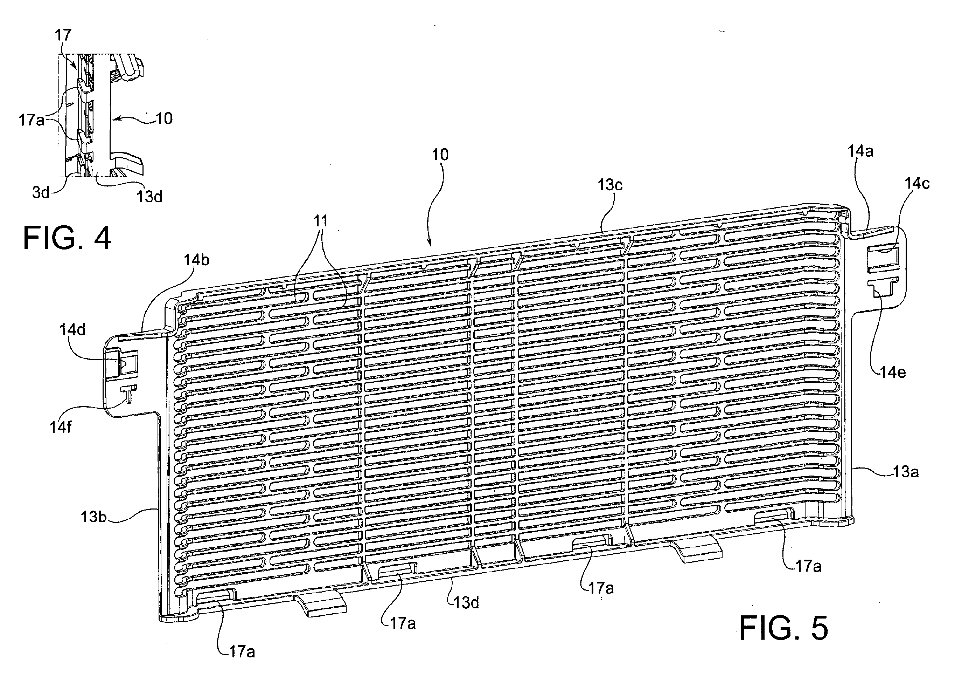

The exchanger 1 conventionally comprises a frame 3, which includes right and left side plates 3a, 3b, an upper plate, which is not visible in the Figures, and a lower plate, visible in Fig. 4 and indicated by 3d. The above-mentioned plates are mutually interconnected in a conventional manner so as to form the frame 3.

The exchanger 1 further comprises a plurality of parallel tubes 5 extending between opposite sides of the frame 3. In the example considered, the exchanger is of the type having horizontal tubes, therefore the tubes 5 extend between the right and left side plates 3a, 3b of the frame 3. Tongues -not shown- can be arranged in the interspaces between the tubes 5.

The exchanger 1 further comprises a pair of headers 7a, 7b, each of which is arranged at a corresponding one of said two opposite sides of the frame 3. In the example considered, the headers 7a, 7b are arranged at the right and left side plates 3a, 3b of the frame 3. Such headers 7a, 7b are generally, but not exclusively, of a plastic material.

The exchanger 1 further comprises a protection grid 10, attached at a face (in particular, the front face) of the heat exchanger 1 and including a plurality of parallel grid elements 11, in which each of such grid elements 11 is adapted to shield a corresponding tube 5 of the heat exchanger 1. The protection grid 10 is in particular an element made integrally of plastic or metal material, and the grid elements 11 are constituted by little bars that are spaced apart one from another, having a pitch corresponding to the pitch of the tubes of the exchanger. The little bars can be mutually connected by reinforcing bridges.

The protection grid 10 comprises right and left side edges 13a, 13b, an upper edge 13c, and a lower edge 13d, defining the extension area of the grid elements 11. The protection grid 10 can extend so as to cover the whole exchanger, or only the lower portion thereof, as in the illustrated example.

In the exchanger illustrated, fastening and supporting means 15 are provided, by means of which the side edges 13a, 13b of the protection grid 10 are directly connected and firmly fastened to the headers 7a, 7b, and by means of which the protection grid 10 is supported by the heat exchanger 1, and anchoring means 17 by means of which the lower edge 13d of the protection grid 10 is unfirmly retained to a lower side of the heat exchanger 1.

To the aims of the present invention, it is meant that two elements are mutually "directly" connected if there is no intermediate element connecting them, except for the fastening and supporting means. Furthermore, it is meant that two elements are mutually "firmly" attached if they can be divided one from the other by disabling or removing the fastening and supporting means, which therefore make a removable connection.

Finally, it is stated that the lower edge of the protection grid is "unfirmly" retained to the lower side of the heat exchanger, by the anchoring means, in the sense that the retention operated by the anchoring means is lost when the fastening and supporting means are disabled or removed, which make the firm fastening of the grid to the exchanger. In particular, the "unfirm" retention is achieved due to the fact that the lower edge of the protection grid engages by interference the lower side of the heat exchanger.

In the illustrated example, the fastening and supporting means are constituted, for each side edge of the protection grid 10, by a pair of snap-fit spring tongues 15a, 15b and by a dowelling and supporting formation 16a, 16b, wherein the spring tongues 15a, 15b and the and supporting formations 16a, 16b are integrally formed on the body of the corresponding header 7a, 7b.

Each spring tongue 15a, 15b extends in a direction perpendicular to the plane of the exchanger, and is arranged in such a way as to be adapted to bend in a vertical direction, being provided with a respective detent 15c, 15d adapted to engage a corresponding portion of the protection grid 10. To this aim, each side edge 13a, 13b of the protection grid is provided with a corresponding ear portion 14a, 14b laterally extending so as to overlap the corresponding header 7a, 7b, and has an aperture 14c, 14d adapted to be snap-fit by the corresponding pair of snap-fit spring tongues 15a, 15b. As it can be noted in the Figures, one of the apertures 14c, 14d (in the example, the one on the right, 14c) has a greater width in the horizontal direction, in order to compensate possible manufacturing tolerances.

Each dowelling and supporting formation 16a, 16b extends in a direction perpendicular to the plane of the exchanger and is T-shaped in cross-section. Each dowelling and supporting formation 16a, 16b is for fitting into a T-shaped aperture 14e, 14f formed in the corresponding ear portion 14a, 14b. As it can be noted in the Figures, one of the shaped apertures 14e, 14f (in the example, the one on the right, 14e) has a greater width in the horizontal direction, in order to compensate possible manufacturing tolerances.

While the snap-fit spring tongues 15a, 15b mainly (or exclusively) exert a retaining function of the protection grid 10 in a direction perpendicular to the plane of the exchanger, dowelling in the directions parallel to the plane of the exchanger and supporting of the protection grid 10 are performed mainly (or exclusively) by the dowelling and supporting formations 16a, 16b.

In an alternative embodiment, not shown, the fastening and supporting means are constituted by screws or rivets fitted into corresponding bores formed on the side edges 13a, 13b, and engaging corresponding seats formed on the body of the headers 7a, 7b in such a way to firmly fasten the protection grid thereto. In such a case, the fastening, dowelling, and supporting functions are performed by the same elements.

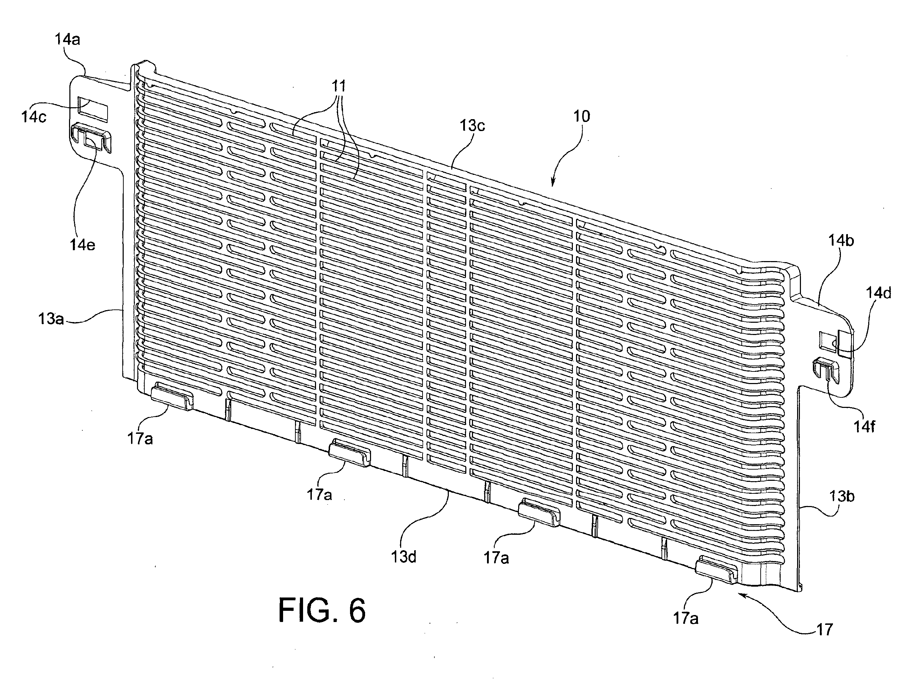

With reference in particular to the Figs. 4 and 6, the above-mentioned anchoring means 17 are constituted by at least one hook portion 17a integrally formed on and extending rearward from the lower edge 13d of the protection grid 10. Said at least one hook portion 17a is adapted to engage a corresponding portion of the lower plate 3d of the frame 3 of the exchanger, so as to unfirmly retaining the lower edge 13d of the protection grid 10 to the lower side of the heat exchanger 1. Such expedient allows reducing or eliminating possible vibrations associated to the lower central part of the protection grid 10, while not requiring complex coupling operations upon assembling the grid on the exchanger.

Preferably, in order to reduce or eliminate possible vibrations associated to the upper central part of the protection grid, an engaging formation (not shown) adapted to snap-fit one (or two) of the tubes 5 of the heat exchanger is integrally formed on the upper edge 13c of the protection grid 10.

Still more preferably, at least one preload curvature is formed on the protection grid 10, which, in the assembled condition, elastically biases the grid elements 11 against the tubes 5 of the exchanger to further reduce the onset of vibrations. Alternatively, or in addition, one or more preload ribs can be further present.

Alternatively, or in addition, a vibration-damping element (not shown) is sandwiched between the protection grid 10 and the tubes 5 of the exchanger, in a shock-absorbing material, such as, for example, rubber, which is arranged in such a way as to be pressed between the protection grid 10 and the tubes 5. Such vibration-damping element can be mechanically attached on the protection grid 10, or moulded thereon.

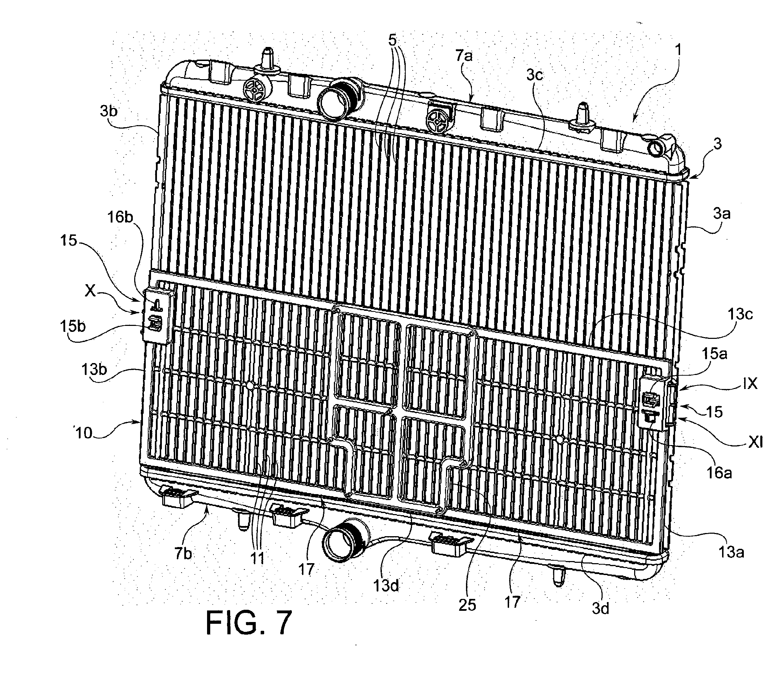

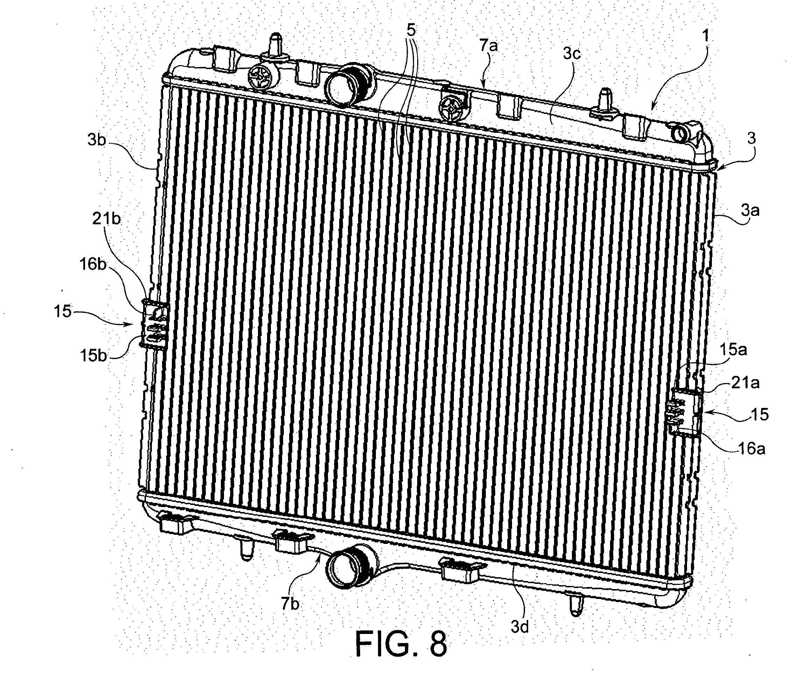

With reference to the Figs. 7 to 11, a second embodiment of a heat exchanger according to the invention, generally indicated by 1, is illustrated. Elements corresponding to those of the preceding embodiment have been indicated by the same reference numbers and, for what has not been explicitly described herein, reference is made to the preceding portion of the description. The second embodiment of the Figs. 7 to 11 differs from the preceding one mainly in that the exchanger is manufactured according to a vertical tubes scheme.

In the example considered, therefore, the tubes 5 extend between the upper 3c and lower 3d plates of the frame 3, and the headers 7a, 7b are arranged at such plates.

In the exchanger illustrated, fastening and supporting means 15 are provided, by means of which the side edges 13a, 13b of the protection grid 10 are directly connected and firmly fastened to the side plates 3a, 3b, and by means of which the protection grid 10 is supported by the heat exchanger 1, and anchoring means 17 by means of which the lower edge 13d of the protection grid 10 is unfirmly retained to a lower side of the heat exchanger 1.

In the example illustrated, the fastening and supporting means are constituted, for each side edge of the protection grid 10, by a pair of snap-fit spring tongues 15a, 15b and by a dowelling and supporting formation 16a, 16b, wherein the spring tongues 15a, 15b and the dowelling and supporting formations 16a, 16b are formed integrally on a support element 21a, 21b that is attached, for example by rivets, to the corresponding side plate 3a, 3b.

In turn, each side edge 13a, 13b of the protection grid is provided with a corresponding coupling portion 23a, 23b that is arranged so as to overlap the corresponding support element 21a, 21b, and having an aperture 14c, 14d adapted to be snap-fit by the corresponding pair of snap-fit spring tongues 15a, 15b.

Each dowelling and supporting formation 16a, 16b is for fitting into a T-shaped aperture 14e, 14f formed in the corresponding coupling portion 14a, 14b.

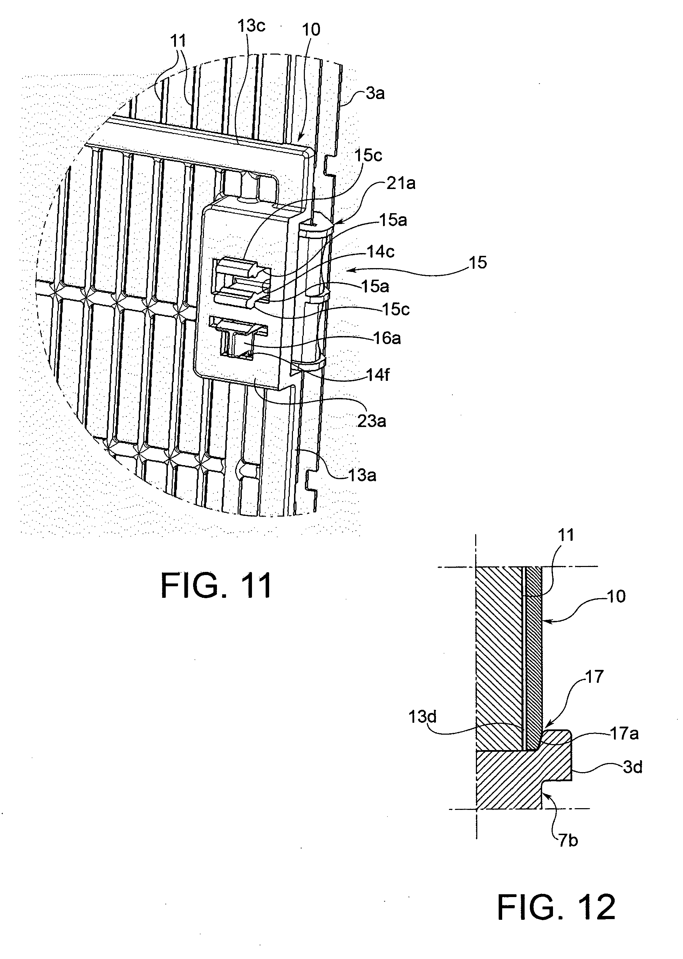

With reference in particular to the Fig. 12, the above-mentioned anchoring means 17 are constituted by at least one tab portion 17a integrally formed on and extending downward from the lower edge 13d of the protection grid 10. Said at least one tab portion 17a is adapted to engage a corresponding slot of the lower plate 3d of the frame 3 of the exchanger, so as to unfirmly retain the lower edge 13d of the protection grid 10 to the lower side of the heat exchanger 1. Such expedient allows reducing or eliminating possible vibrations associated to the lower central part of the protection grid 10, while not requiring complex coupling operations upon assembling the grid on the exchanger.

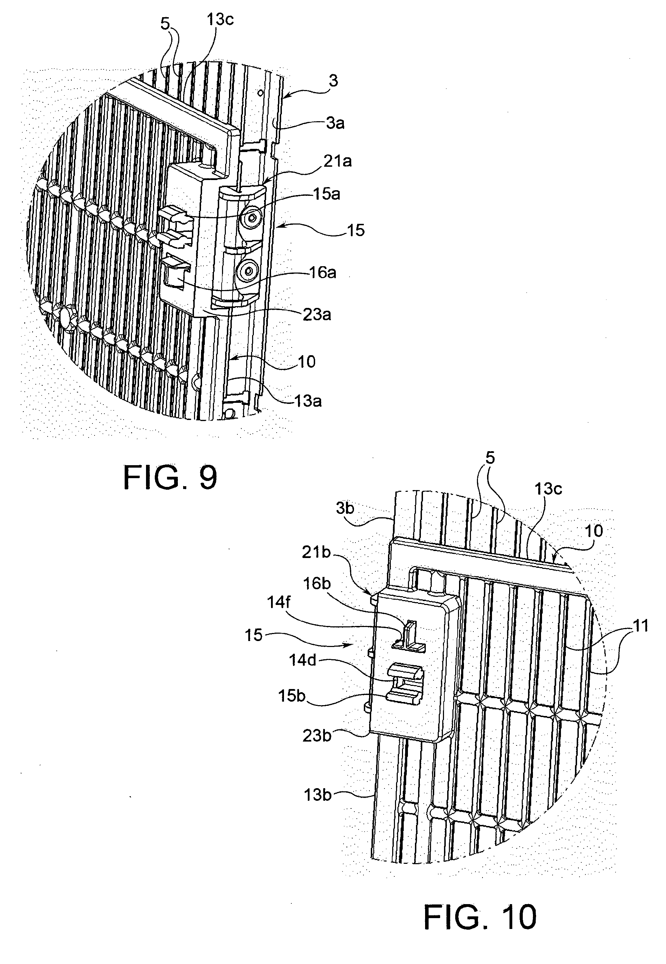

As it can be noticed in the Figs. 7 and 9, a vibration-damping element 25, of shock-absorbing material is sandwiched between the protection grid 10 and the tubes 5 of the exchanger, such as, for example rubber, which is arranged in such a way as to be pressed between the protection grid 10 and the tubes 5. Such vibration-damping element can be mechanically attached on the protection grid 10, or moulded thereon. In the example illustrated, the vibration-damping element 25 is mechanically attached to a corresponding portion of the protection grid 10, by means of barbs integrally formed on the vibration-damping element 25 and inserted into corresponding bores formed on the protection grid.

## Claims

1. A heat exchanger of a vehicle, comprising
a frame (3),
a plurality of parallel tubes (5) extending between two opposite sides of the frame,
a pair of headers (7a, 7b), each of which is arranged at a corresponding one of said two opposite sides of the frame, and
a protection grid (10) attached at a face of the heat exchanger and including a plurality of parallel grid elements (11), wherein each of said grid elements is adapted to shield a corresponding tube of the heat exchanger,
**characterized in that** fastening and supporting means (15) are provided, by means of which opposite side edges (13a, 13b) of the protection grid are directly connected and firmly fastened to the frame or to the headers, and by means of which the protection grid is supported by the heat exchanger, and anchoring means (17) are provided, by means of which a lower edge (13d) of the protection grid is unfirmly retained to a lower side of the heat exchanger.

2. An exchanger according to claim 1, wherein the fastening and supporting means are constituted, for each side edge of the protection grid (10), by a pair of snap-fit spring tongues (15a, 15b) for snap-fitting into a corresponding aperture (14c, 14d) arranged at the side edge of the protection grid, and by a dowelling and supporting formation (16a, 16b) for fitting into a corresponding shaped opening (14e, 14f) arranged at the side edge of the protection grid, wherein support of the protection grid (10) on the heat exchanger (1) is mainly provided by the dowelling and supporting formation (16a, 16b).

3. An exchanger according to claim 2, wherein each spring tongue (15a, 15b) extends in a direction perpendicular to the plane of the heat exchanger and is arranged in such a way as to be adapted to bend in a vertical direction, being provided with a respective detent (15c, 15d) adapted to engage a corresponding portion of the protection grid (10).

4. An exchanger according to claim 2 or 3, wherein each dowelling and supporting formation (16a, 16b) extends in a direction perpendicular to the plane of the exchanger and is T-shaped in cross-section, the corresponding shaped opening (14e, 14f) being correspondingly T-shaped.

5. An exchanger according to any of claims 2 to 4, wherein the aperture (14c) and the shaped opening (14e) associated to one of the side edges (13a) of the protection grid are wider in the horizontal direction than the aperture (14d) and the shaped opening (14f) associated to the other of the side edges (13b) of the protection grid.

6. An exchanger according to any of claims 2 to 5, wherein the spring tongues (15a, 15b) and the dowelling and supporting formations (16a, 16b) are integrally formed on the body of said headers (7a, 7b), or on support elements (21a, 21b) respectively attached to side plates (3a, 3b) of the frame.

7. An exchanger according to any of claims 2 to 6, wherein said apertures and shaped openings are arranged on respective ear portions (14a, 14b) laterally extending from each side edge (13a, 13b) of the protection grid.

8. An exchanger according to any of preceding claims, wherein said fastening and supporting means are constituted by screws or rivets fitted into corresponding bores formed on the side edges (13a, 13b) of the protection grid, and engaging corresponding seats arranged on the frame or on the headers in such a way to firmly fasten the protection grid thereto.

9. An exchanger according to any of preceding claims, wherein said anchoring means are constituted by at least one hook portion (17a) integrally formed on and extending rearward from the lower edge (13d) of the protection grid (10), said at least one hook portion (17a) being adapted to engage a corresponding portion of a lower plate (3d) of the frame (3) of the heat exchanger.

10. An exchanger according to any of claims 1 to 8, wherein said anchoring means are constituted by at least one tab portion (17a) integrally formed on and extending downward from the lower edge (13d) of the protection grid (10), said at least one tab portion (17a) being adapted to engage a corresponding slot of a lower plate (3d) of the frame (3) of the heat exchanger.

11. An exchanger according to any of the preceding claims, wherein at least one preload curvature is formed on the protection grid (10) for elastically biasing at least one of the grid elements (11) against at least one of the tubes (5) of the heat exchanger.

12. An exchanger according to any of the preceding claims, wherein the protection grid (10) is provided with a vibration-damping element (25) of shock-absorbing material, which is arranged in such a way as to be pressed between the protection grid (10) and the tubes (5) of the heat exchanger.

## Patentansprüche

1. Wärmetauscher eines Fahrzeuges, umfassend:
einen Rahmen (3),
eine Mehrzahl von parallelen Rohren (5), die sich zwischen zwei entgegengesetzten bzw. gegenüberliegenden Seiten des Rahmens erstrecken,
ein Paar von Kopfstücken (7a, 7b), von denen jedes an einer entsprechenden der beiden entgegengesetzten bzw. gegenüberliegenden Seiten des Rahmens angeordnet ist, und
ein Schutzgitter (10), das an einer Fläche des Wärmetauschers angebracht ist und
eine Mehrzahl von parallelen Gitterelementen (11) beinhaltet, wobei jedes der Gitterelemente dafür ausgelegt ist, ein entsprechendes Rohr des Wärmetauschers abzuschirmen,
**dadurch gekennzeichnet, dass** Befestigungs- und Stützmittel (15) vorgesehen sind, mittels derer entgegengesetzte bzw. gegenüberliegende Seitenkanten (13a, 13b) des Schutzgitters direkt verbunden und fest an dem Rahmen oder an den Kopfstücken befestigt sind und mittels derer das Schutzgitter von dem Wärmetauscher gestützt wird, und Verankerungsmittel (17) vorgesehen sind, mittels derer eine untere Kante (13d) des Schutzgitters lose an einer unteren Seite des Wärmetauschers gehalten wird.

2. Tauscher nach Anspruch 1, wobei die Befestigungs- und Stützmittel für jede Seitenkante des Schutzgitters (10) gebildet werden von einem Paar von Schnappsitzfederzungen (15a, 15b) zur Schnapppassung in eine entsprechende Apertur (14c, 14d) hinein, die an der Seitenkante des Schutzgitters vorgesehen ist, und von einem Dübelungs- und Stützaufbau (16a, 16b) zur Passung in eine entsprechende geformte Öffnung (14e, 14f) hinein, die an der Seitenkante des Schutzgitters angeordnet ist, wobei die Stützung des Schutzgitters (10) an dem Wärmetauscher (1) hauptsächlich durch den Dübelungs- und Stützaufbau (16a, 16b) bereitgestellt wird.

3. Tauscher nach Anspruch 2, wobei jede Federzunge (15a, 15b) sich in einer Richtung senkrecht zur Ebene des Wärmetauschers erstreckt und derart angeordnet ist, dass sie sich in vertikaler Richtung biegen kann, und mit einem jeweiligen Vorsprung (15c, 15d) versehen ist, der dafür ausgelegt ist, einen entsprechenden Abschnitt des Schutzgitters (10) in Eingriff zu nehmen.

4. Tauscher nach Anspruch 2 oder 3, wobei jeder Dübelungs- und Stützaufbau (16a, 16b) sich in einer Richtung senkrecht zur Ebene des Tauschers erstreckt und im Querschnitt T-förmig ist, wobei die entsprechende geformte Öffnung (14e, 14f) entsprechend T-förmig ist.

5. Tauscher nach einem der Ansprüche 2 bis 4, wobei die Apertur (14c) und die geformte Öffnung (14e) mit Zuordnung zu einer der Seitenkanten (13a) des Schutzgitters in horizontaler Richtung breiter als die Apertur (14d) und die geformte Öffnung (14f) mit Zuordnung zu der anderen der Seitenkanten (13b) des Schutzgitters sind.

6. Tauscher nach einem der Ansprüche 2 bis 5, wobei die Federzungen (15a, 15b) und die Dübelungs- und Stützaufbauten (16a, 16b) integral an dem Körper der Kopfstücke (7a, 7b) oder an Stützelementen (21 a, 21 b), die jeweils an Seitenplatten (3a, 3b) des Rahmens angebracht sind, ausgebildet sind.

7. Tauscher nach einem der Ansprüche 2 bis 6, wobei die Aperturen und geformten Öffnungen an jeweiligen Ohrabschnitten (14a, 14b) angeordnet sind, die sich seitlich von jeder Seitenkante (13a, 13b) des Schutzgitters aus erstrecken.

8. Tauscher nach einem der vorhergehenden Ansprüche, wobei die Befestigungsund Stützmittel von Schrauben oder Nieten gebildet werden, die in entsprechende Löcher eingepasst sind, die an den Seitenkanten (13a, 13b) des Schutzgitters ausgebildet sind, und entsprechende Sitze in Eingriff nehmen, die an dem Rahmen oder an den Kopfstücken derart angeordnet sind, dass sie das Schutzgitter fest daran befestigen.

9. Tauscher nach einem der vorhergehenden Ansprüche, wobei die Verankerungsmittel von wenigstens einem Hakenabschnitt (17a) gebildet werden, der integral an der unteren Kante (13d) des Schutzgitters (10) ausgebildet ist und sich hiervon nach hinten erstreckt, wobei der wenigstens eine Hakenabschnitt (17a) dafür ausgelegt ist, einen entsprechenden Abschnitt einer unteren Platte (3d) des Rahmens (3) des Wärmetauschers in Eingriff zu nehmen.

10. Tauscher nach einem der Ansprüche 1 bis 8, wobei die Verankerungsmittel von wenigstens einem Laschenabschnitt (17a) gebildet werden, der integral an der unteren Kante (13d) des Schutzgitters (10) ausgebildet ist und sich hiervon nach unten erstreckt, wobei der wenigstens eine Laschenabschnitt (17a) dafür ausgelegt ist, einen entsprechenden Schlitz einer unteren Platte (3d) des Rahmens (3) des Wärmetauschers in Eingriff zu nehmen.

11. Tauscher nach einem der vorhergehenden Ansprüche, wobei wenigstens eine vorbelastende Krümmung dem Schutzgitter (10) aufgeprägt ist, um wenigstens eines der Gitterelemente (11) gegen wenigstens eines der Rohre (5) des Wärmetauschers elastisch vorzuspannen.

12. Tauscher nach einem der vorhergehenden Ansprüche, wobei das Schutzgitter (10) mit einem Schwingungsdämpfungselement (25) aus stoßabsorbierendem Material versehen ist, das derart angeordnet ist, dass es zwischen das Schutzgitter (10) und die Rohre (5) des Wärmetauschers geklemmt ist.

## Revendications

1. Echangeur de chaleur d'un véhicule, comprenant :
un châssis (3),
une pluralité de tubes parallèles (5) s'étendant entre deux côtés opposés du châssis,
une paire de colonnes (7a, 7b), dont chacune est agencée d'un côté correspondant desdits deux côtés opposés du châssis, et
une grille de protection (10) fixée au niveau d'une face de l'échangeur de chaleur et comprenant une pluralité d'éléments de grille parallèles (11), dans lequel chacun desdits éléments de grille est adapté pour protéger un tube correspondant de l'échangeur de chaleur,
**caractérisé en ce que** l'on prévoit des moyens de fixation et de support (15), au moyen desquels des bords latéraux opposés (13a, 13b) de la grille de protection sont directement raccordés et fermement fixés au châssis ou aux colonnes, et au moyen desquels la grille de protection est supportée par l'échangeur de chaleur, et l'on prévoit des moyens d'ancrage (17) au moyen desquels un bord inférieur (13d) de la grille de protection n'est pas retenu fermement sur un côté inférieur de l'échangeur de chaleur.

2. Echangeur selon la revendication 1, dans lequel les moyens de fixation et de support sont constitués, pour chaque bord latéral de la grille de protection (10), par une paire de languettes de ressort d'encliquetage (15a, 15b) pour s'encliqueter dans une ouverture (14c, 14d) correspondante agencée au niveau du bord latéral de la grille de protection, et par une formation de chevillage et de support (16a, 16b) pour s'adapter dans une ouverture formée de manière correspondante (14e, 14f) agencée au niveau du bord latéral de la grille de protection, dans lequel le support de la grille de protection (10) sur l'échangeur de chaleur (1) est principalement fourni par la formation de chevillage et de support (16a, 16b).

3. Echangeur selon la revendication 2, dans lequel chaque languette de ressort (15a, 15b) s'étend dans une direction perpendiculaire au plan de l'échangeur de chaleur et est agencée afin d'être adaptée pour fléchir dans une direction verticale, étant prévue avec un cliquet (15c, 15d) respectif pour mettre en prise une partie correspondante de la grille de protection (10).

4. Echangeur selon la revendication 2 ou 3, dans lequel chaque formation de chevillage et de support (16a, 16b) s'étend dans une direction perpendiculaire au plan de l'échangeur et a une section transversale en forme de T, l'ouverture formée de manière correspondante (14e, 14f) étant formée en forme de T, de manière correspondante.

5. Echangeur selon l'une quelconque des revendications 2 à 4, dans lequel l'ouverture (14c) et l'ouverture formée (14e) associée à l'un des bords latéraux (13a) de la grille de protection sont plus larges dans la direction horizontale que l'ouverture (14d) et l'ouverture formée (14f) associée à l'autre des bords latéraux (13b) de la grille de protection.

6. Echangeur selon l'une quelconque des revendications 2 à 5, dans lequel les languettes de ressort (15a, 15b) et les formations de chevillage et de support (16a, 16b) sont formées de manière solidaire sur le corps desdites colonnes (7a, 7b) ou sur les éléments de support (21a, 21b) respectivement fixés aux plaques latérales (3a, 3b) du châssis.

7. Echangeur selon l'une quelconque des revendications 2 à 6, dans lequel lesdites ouvertures et les ouvertures formées sont agencées sur des parties d'oreille (14a, 14b) s'étendant latéralement à partir de chaque bord latéral (13a, 13b) de la grille de protection.

8. Echangeur selon l'une quelconque des revendications précédentes, dans lequel lesdits moyens de fixation et de support sont constitués par des vis ou des rivets montés dans des alésages correspondants formés sur les bords latéraux (13a, 13b) de la grille de protection, et des sièges correspondants de mise en prise agencés sur le châssis ou sur les colonnes afin d'y fixer fermement la grille de protection.

9. Echangeur selon l'une quelconque des revendications précédentes, dans lequel lesdits moyens d'ancrage sont constitués par au moins une partie de crochet (17a) formée de manière solidaire sur et s'étendant vers l'arrière à partir du bord inférieur (13d) de la grille de protection (10), ladite au moins une partie de crochet (17a) étant adaptée pour mettre en prise une partie correspondante d'une plaque inférieure (3d) du châssis (3) de l'échangeur de chaleur.

10. Echangeur selon l'une quelconque des revendications 1 à 8, dans lequel lesdits moyens d'ancrage sont constitués par au moins une partie de languette (17a) formée de manière solidaire sur et s'étendant vers le bas à partir du bord inférieur (13d) de la grille de protection (10), ladite au moins une partie de languette (17a) étant adaptée pour mettre en prise une fente correspondante d'une plaque inférieure (3d) du châssis (3) de l'échangeur de chaleur.

11. Echangeur selon l'une quelconque des revendications précédentes, dans lequel au moins une courbure de pré-charge est formée sur la grille de protection (10) pour solliciter élastiquement au moins l'un des éléments de grille (11) contre au moins l'un des tubes (5) de l'échangeur de chaleur.

12. Echangeur selon l'une quelconque des revendications précédentes, dans lequel la grille de protection (10) est prévue avec un élément d'amortissement de vibrations (25) réalisé avec un matériau amortissant qui est agencé afin d'être comprimé entre la grille de protection (10) et les tubes (5) de l'échangeur de chaleur.
